# EUROPÄISCHE PATENTSCHRIFT

(11) **EP 0 468 196 B1**
(45) Veröffentlichungstag und Bekanntmachung des Hinweises auf die Patenterteilung: **11.10.1995**
(21) Anmeldenummer: 91110031.1
(22) Anmeldetag: 19.06.1991
(51) Int. Cl.: B26B 13/26, H02G 1/00

(54) **Ratschenschneider**
Ratchet and pawl shears
Cisailles à cliquet

(30) Priorität: 24.07.1990 DE 9010931 U
(43) Veröffentlichungstag der Anmeldung: 29.01.1992
(73) Patentinhaber: Knipex-Werk C. Gustav Putsch, 42349 Wuppertal (DE)
(72) Erfinder: Putsch, Ralf, W-5600 Wuppertal 12 (DE); Putsch, Karl, W-5600 Wuppertal 12 (DE)
(74) Vertreter: Müller, Enno, Dipl.-Ing.

(56) Entgegenhaltungen:
- EP-A- 0 186 222
- EP-A- 0 452 668
- GB-A- 1 056 176
- US-A- 1 454 917
- US-A- 3 885 309
- US-A- 4 677 748

## Beschreibung

Die Erfindung betrifft einen handbetätigten Ratschenschneider, insbesondere Kabelschneider gemäß dem Gattungsbegriff des Anspruchs 1.

Ein derartiger Kabelschneider ist aus der US-Patentschrift 14 54 917 bekannt. Bei dem dort offenbarten Kabelschneider wird der Sperrhebel von einem der beweglichen Schneide zugeordneten Anschlag beaufschlagt, wenn die Schneide vollkommen geschlossen ist. Durch diese Beaufschlagung wird der Sperrhebel außer Zahneingriff zu der Verzahnung der beweglichen Schneide gebracht. Einhergehend mit der Verschwenkung des Sperrhebels wird auch im Wege einer Hebelübersetzung der Vorschubhebel außer Eingriff gebracht. Bei diesem bekannten Schneidegerät tritt die Entkopplung des Ratschenmechanismus zu der Verzahnung der beweglichen Schneide nur ein, wenn die Schneide vollkommen geschlossen ist. In Zwischenstellungen ist hier keine Entkopplung vorgesehen.

Weiter ist ein Ratschenschneider aus der britischen Patentschrift 1 056 176 her bekannt. Dort muß die Freigabeüberstellung immer durch eine Distanzierung der beiden Griffe voneinander gegen Federwirkung herbeigeführt werden. Werden die Griffe losgelassen, so tritt automatisch wieder eine Verzahnung ein.

Aus der DE-PS 28 32 561 ist ein Ratschenschneider bekannt, wobei ein Griffteil in eine feste Schneidbacke übergeht und an deren freien Ende eine schwenkbare Schneide gelagert ist.

Diese trägt eine außenseitige Verzahnung, welche mit einem von einem beweglichen Griff betätigten, einen Vorschubhebel und einen Sperrhebel aufweisenden Schließtrieb zusammenwirkt. Zum Lösen dieses Formschlusses stehen der Vorschubhebel und der Sperrhebel mit einem gemeinsamen Entriegelungsschieber in Eingriff. Durch Verschieben des Entriegelungsschiebers läßt sich ein Herausklinken der Hebel aus der Verzahnung und in Folge dessen eine Freigabe der Schneidbacken erreichen. Nachteilig an dieser Ausführung ist, daß der Schieber so lange in der Entriegelungsstellung gehalten werden muß bis die schwenkbare Schneidbacke mit ihrer Verzahnung aus dem Bereich des Schließtriebs gelangt. Eine Arretierung in Freigabestellung der beweglichen Schneidbacke ist nicht möglich.

Aufgabe der Erfindung ist es, einen gattungsgemäßen Ratschenschneider fertigungstechnisch einfacher und handhabungstechnisch günstiger auszubilden.

Gelöst ist die Aufgabe durch die im Anspruch 1 angegebene Erfindung. Die Unteransprüche sind vorteilhafte Weiterbildungen des Erfindungsgegenstandes.

Zufolge solcher Ausgestaltung ist ein gattungsgemäßer Ratschenschneider erhöhten Gebrauchswertes geschaffen, bei dem eine Arretierung der Freigabestellung der beweglichen Schneidbacke möglich ist, wobei die baulichen Mittel einfach und zweckmäßig ausgebildet sind. So ist so vorgegangen, daß der Sperrhebel den Vorschubhebel in seiner Freigabestellung hintergreift, derart, daß der Vorschubhebel außer Eingriff bewegt wird und sogleich den Sperrhebel in seiner Freigabestellung blockiert. Ein umständliches Festhalten des Freigabemechanismus ist nicht erforderlich. Somit ist eine handhabungstechnisch günstige Einhandbedienung des Ratschenschneiders gewährleistet. Als besonders vorteilhaft erweist es sich hierbei, daß der Sperrhebel einen Handhabungsfortsatz aufweist. Somit wird die Anzahl der Einzelteile auf ein Minimum optimiert und eine Gewichtsreduzierung erzielt, da ein zusätzliches Entriegelungselement entfällt. Als besonders vorteilhaft erweist es sich hierbei, daß der Handhabungsfortsatz sich in der Ebene des Sperrhebels erstreckt und seitlich eine Abdeckplatte überragt. Hierdurch ergibt sich eine ergonomisch günstige Freigabetätigung der schwenkbaren Schneide. Der Handhabungsfortsatz befindet sich bei dieser Ausgestaltung im Daumenbereich der den Ratschenschneider betätigenden Hand und gewährleistet somit eine optimale Einhandbedienung. Ein weiterer Vorteil dieser Ausgestaltung ist darin zu sehen, daß sich hieraus eine flachere Bauweise ergibt, da keine weitere aufgesetzte Bauteile (Entriegelungselemente usw.) benötigt werden.

Ein weiterer Vorteil ergibt sich bei Ratschenschneidern, wobei der Lagerungsbereich des Schwenkgriffes zwischen einer Lagerplatte des Festgriffes und einer Abdeckplatte aufgenommen ist, dadurch, daß ein Gelenkzapfen des Vorschubhebels lose in einer Gelenkausformung des Schwenkgriffes sowie zwischen der Lagerplatte und der Abdeckplatte aufgenommen ist. Hierdurch ist ein weiterer Fortschritt zu Erzielung einer flacheren Bauform des Ratschenschneiders erzielt. Durch die erwähnte Ausbildung ist eine Anordnung des Vorschubhebels auf der gleichen Ebene des Schwenkgriffes realisiert. Als besonders vorteilhaft erweist es sich hierbei, daß die Gelenkausformung im wesentlichen halbkreisförmig ist. Um einen sicheren Formschluß zwischen Vorschubhebel und Schwenkgriff zu erzielen, ist bevorzugt vorgesehen, daß die Gelenkausformung größer als 180° ist. Weiterhin besteht ein vorteilhaftes Merkmal darin, daß der Vorschubhebel sich in eine in der Lagerplatte ausgebildete Aufnahmetasche erstreckt. Die Arretierung des Freilaufs der schwenkbaren Schneidbacke wird vorzugsweise dadurch erzielt, daß der Vorschubhebel einen Blockierungsfortsatz aufweist, der den Schwenkhebel untergreift und durch den Sperrhebel fangbar ist. Die Einheit Vorschubhebel/Blockierungsfortsatz ist hierbei als Wippe ausgestaltet, wobei sich der Drehpunkt im Achsmittelpunkt des Gelenkzapfens befindet. In Freigabestellung der schwenkbaren Schneide hintergreift der Sperrhebel den Blockierungsfortsatz, wobei der Vorschubhebel außer Eingriff zur Verzahnung der Schneidbacke gehalten wird. Sogleich hält der Blockierungsfortsatz den Sperrhebel in seiner Freigabestellung. Vorschubhebel und Sperrhebel blockieren sich in dieser Stellung gegenseitig und erzielen hierdurch eine Arretierung der Freigabestellung. Ein Aufheben der Arretierung ist nur willensbetont möglich, indem der Sperrhebel mit seinem Handhabungsfortsatz vom Blockierungsfortsatz wegbewegt wird und diesen freigibt. Sodann steht der Vorschubhebel wieder in Eingriff mit der Verzahnung der schwenkbaren Schneide. Des weiteren ist zur Einsparung von Bauteilen und zur Gewichtsreduzierung vorgesehen, daß der Sperrhebel und ein Verriegelungshebel von einer gemeinsamen Feder beaufschlagt sind. Vorzugsweise ist vorgesehen, daß die Feder in der Freigabestellung und der Eingriffsstellung des Sperrhebels den Verriegelungshebel in eine Offenstellung vorspannt. Diese Ausgestaltung gewährleistet ein sicheres Betätigen des Ratschenschneiders. Ein Verriegeln des Werkzeugs kann nur willensbetont erfolgen, wenn der Verriegelungshebel entgegen der Federkraft in die Verriegelungsstellung bewegt wird. Entsprechend vorteilhaft ist ist auch, daß die Feder den Verriegelungshebel freigibt bei einem Herauswandern der beweglichen Schneidbacke aus dem Eingriff mit dem Sperrhebel. Sobald die bewegliche Schneide den Bereich des Sperrhebels verläßt, verlagert sich dieser mittels Federkraft der sich an dem Verriegelungshebel abstützenden Feder in eine Auslösestellung. Bei dieser Drehbewegung des Sperrhebels wird die Feder schließlich durch eine Anschlagkante des Sperrhebels mitgenommen und der Verriegelungshebel somit freigegeben. Hierbei erweist es sich als vorteilhaft, daß der Verriegelungshebel sich aufgrund seiner Gewichtsverteilung ohne Federbelastung in die Verriegelungsstellung selbsttätig verlagert. Sobald die bewegliche Schneide aus dem Eingriff des Sperrhebels herauswandert, was erst nach Überlagerung der Schneidkanten der festen und der beweglichen Schneide erfolgt, ist ein weiterer Vortrieb der beweglichen Schneide nicht möglich und der Verriegelungshebel verschwenkt selbsttätig in seine Verriegelungsstellung. Es ist somit nach erfolgtem Durchtrennen eines Kabels oder dergleichen nicht nötig den Verriegelungshebel manuell zu betätigen. Der Ratschenschneider kann nach Gebrauch sofort gesichert beiseite gelegt werden. Des weiteren ist es noch von Vorteil, daß der Schwenkgriff wahlweise über einen Winkel verschwenkbar ist, der einen Vorschub um einen oder zwei Zähne der Verzahnung beweglichen Schneide entspricht. Somit kann zwischen einem schnelleren oder langsameren Schließen der Schneiden gewählt werden. In einer weiteren Ausgestaltung ist der Ratschenschneider derart ausgebildet, daß der Ratschenmechanismus im wesentlichen in einer (ebenen) Lage zwischen einer oberen und einer unteren Abdeckplatte gebildet ist, wobei notwendige Unter- bzw. Übergreifungen mittels einer Taschenausbildung in der oberen und/oder unteren Abdeckplatte realisiert sind. Ein derart realisierter Ratschenschneider weist somit eine relativ flache Bauweise auf. Durch diese handhabungstechnisch optimierte Gestaltung des Ratschenschneiders ist es nunmehr auch möglich, in schwierig zugänglichen Bereichen zu arbeiten. Hierbei erweist es sich als besonders vorteilhaft, daß der Sperrhebel eine in die Aufnahmetasche eintauchende Nase ausbildet, zur Erfassung des Vorschubhebels. Dieser Vorschubhebel weist seinerseits unterseitig eine die Kontur des Vorschubhebels überragende Platte auf, die in ihrer Dicke im wesentlichen der Tiefe der Aufnahmetasche entspricht. Die Arretierung des Freilaufs der schwenkbaren Schneidbacke wird hierbei dadurch erzielt, daß die Nase des Sperrhebels die Platte des Vorschubhebels im Bereich der Aufnahmetasche hintergreift, wobei auch hier der Vorschubhebel außer Eingriff zur Verzahnung der Schneidbacke gehalten wird. Zum Aufheben der Arretierung ist hierbei lediglich ein Zusammendrücken der Griffe erforderlich. Schließlich erweist es sich auch als besonders vorteilhaft, daß die Platte und entsprechend die Aufnahmetasche mit einer solchen Größe ausgebildet sind, daß sie ständig bei allen Bewegungen in Überlagerung mit der Schneide sind.

Weitere Vorteile und Einzelheiten der Erfindung sind nachstehend anhand zweier zeichnerisch veranschaulichten Ausführungsbeispiele näher erläutert. Es zeigt:
- Fig. 1: eine Vorderansicht auf einen erfindungsgemäßen Ratschenschneider bei abgenommener Abdeckplatte in zusammengedrückter Betriebsstellung, gemäß einer ersten Ausführungsform,
- Fig. 2: eine Ausschnittsvergrößerung gemäß Fig. 1,
- Fig. 3: den Bereich einer einen Vorschubhebel aufnehmenden Gelenkausformung eines Schwenkgriffes in perspektivischer Darstellung,
- Fig. 4: eine Seitenansicht des Ratschenschneiders gemäß Pfeil x in Fig. 1,
- Fig. 5: eine weitere Seitenansicht gemäß Pfeil y in Fig. 1,
- Fig. 6: eine Rückansicht des Ratschenschneiders,
- Fig. 7: eine der Fig. 1 entsprechende Darstellung, jedoch in entspannter Betriebsstellung,
- Fig. 8: eine Ausschnittsvergrößerung gemäß Fig. 7,
- Fig. 9: eine vergrößerte Darstellung der Freigabestellung einer beweglichen Schneide in entspannter Stellung des Schwenkhebels,
- Fig. 10: eine der Fig. 9 entsprechende Darstellung, jedoch bei gespannter Stellung des Schwenkhebels,
- Fig. 11: eine vergrößerte Darstellung der Verriegelungsstellung, wobei die bewegliche Schneide aus dem Bereich des Sperrhebels herausgewandert ist und der Verriegelungshebel sich selbsttätig in die Verriegelungsstellung verlagert hat,
- Fig. 12: eine Vorderansicht auf den Ratschenschneider in zusammengedrückter und gesicherter Betriebsstellung, eine zweite Ausführungsform betreffend,
- Fig. 13: eine Ausschnittsvergrößerung des Ratschenmechanismus',
- Fig. 14: eine der Figur 13 entsprechende Darstellung, wobei jedoch der Sperrhebel außer Eingriff zu der beweglichen Schneide gehalten ist und
- Fig. 15: den Bereich des Ratschenmechanismus' in perspektivischer Darstellung.

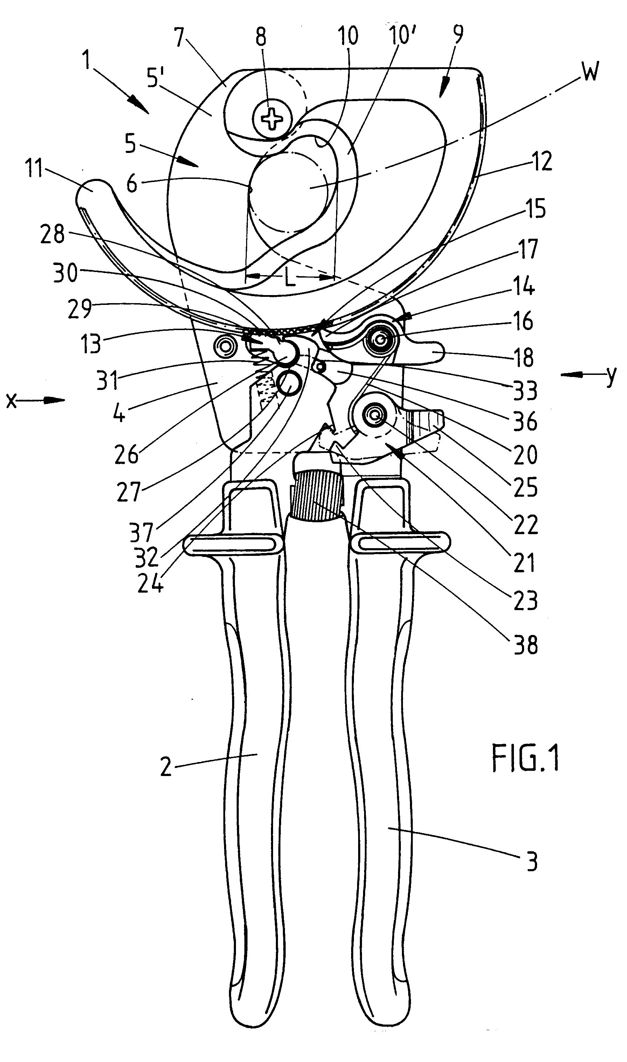

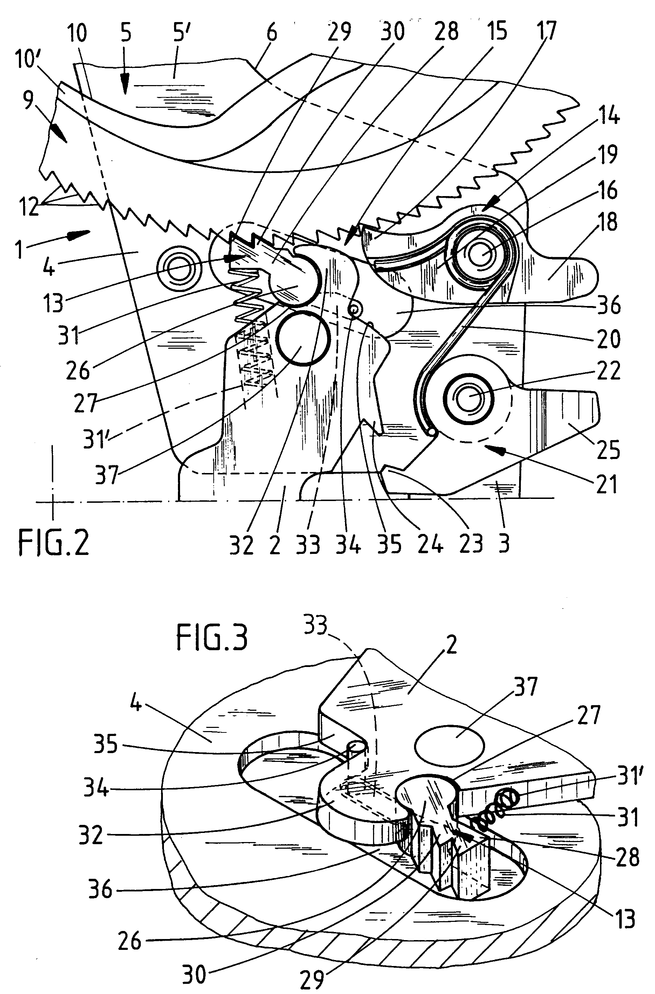

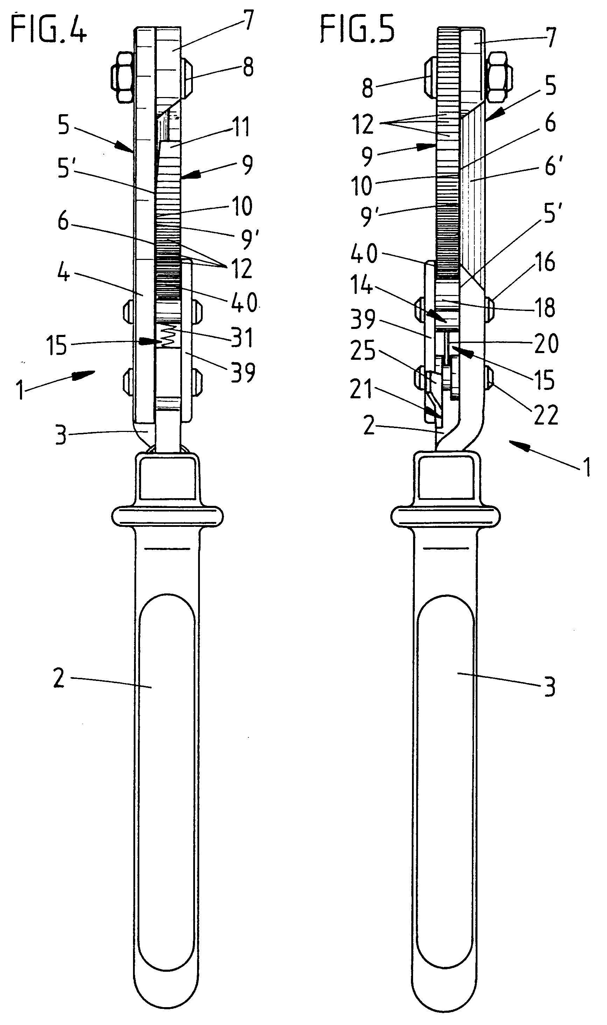

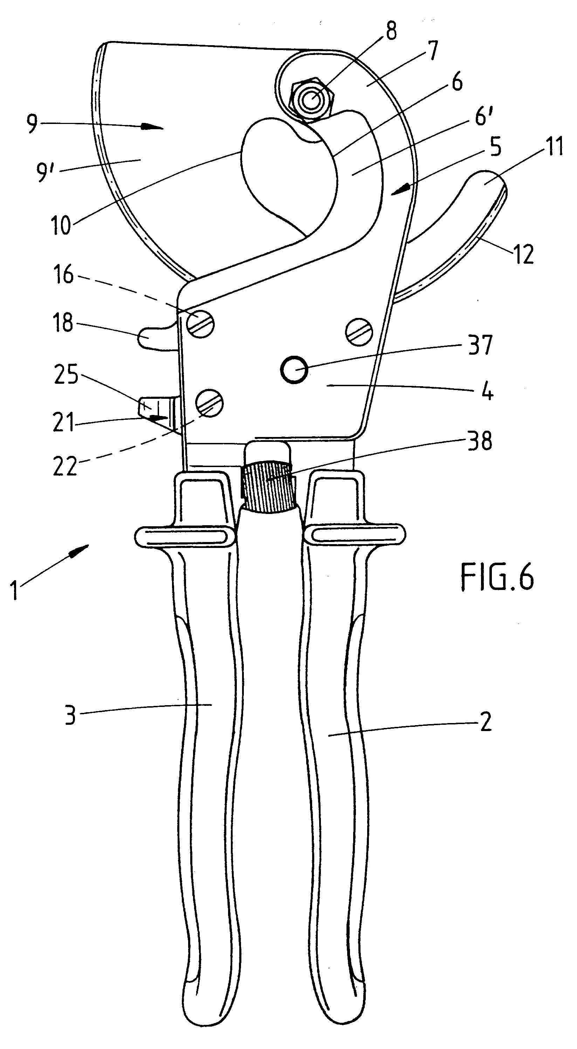

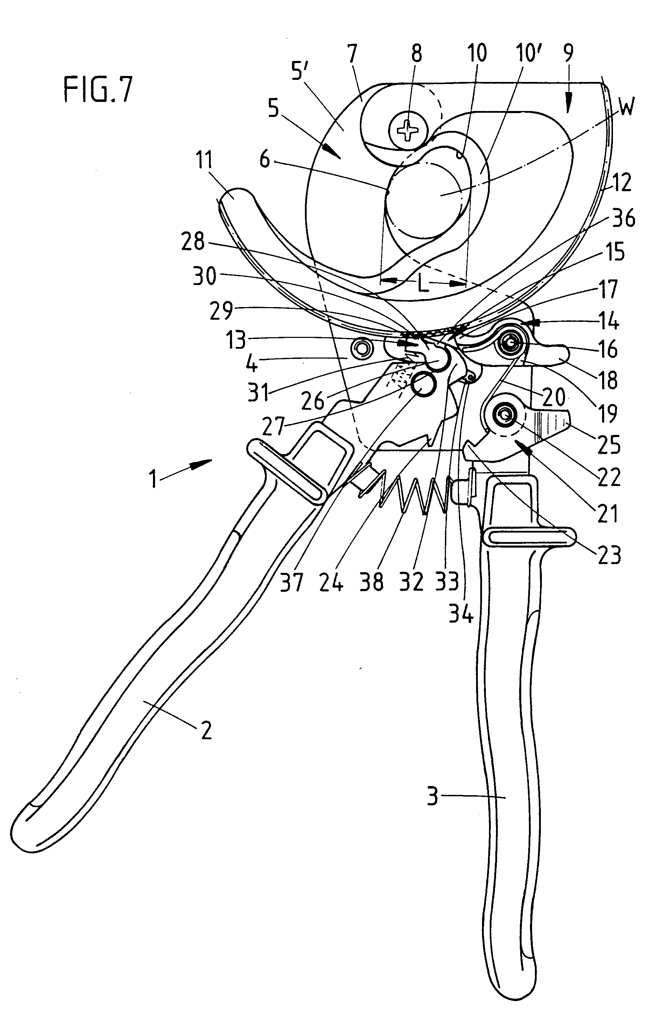

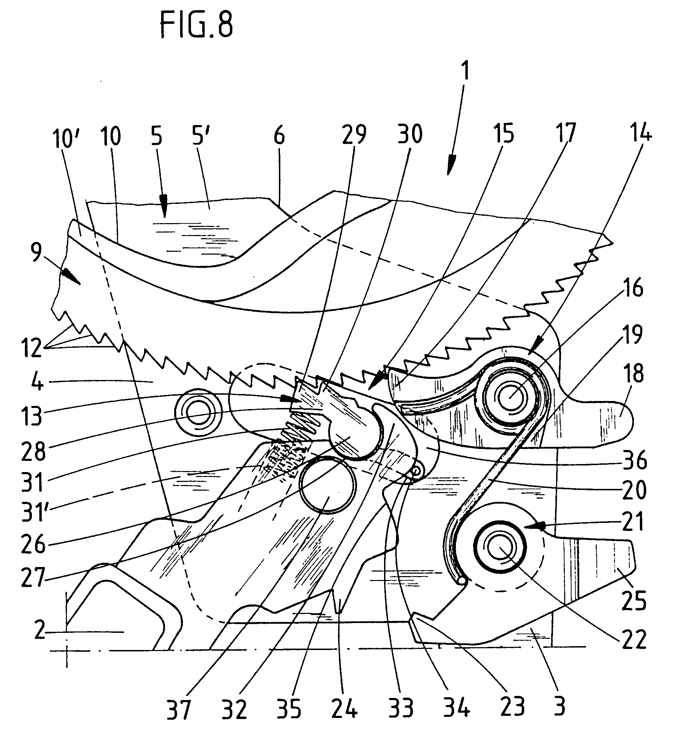

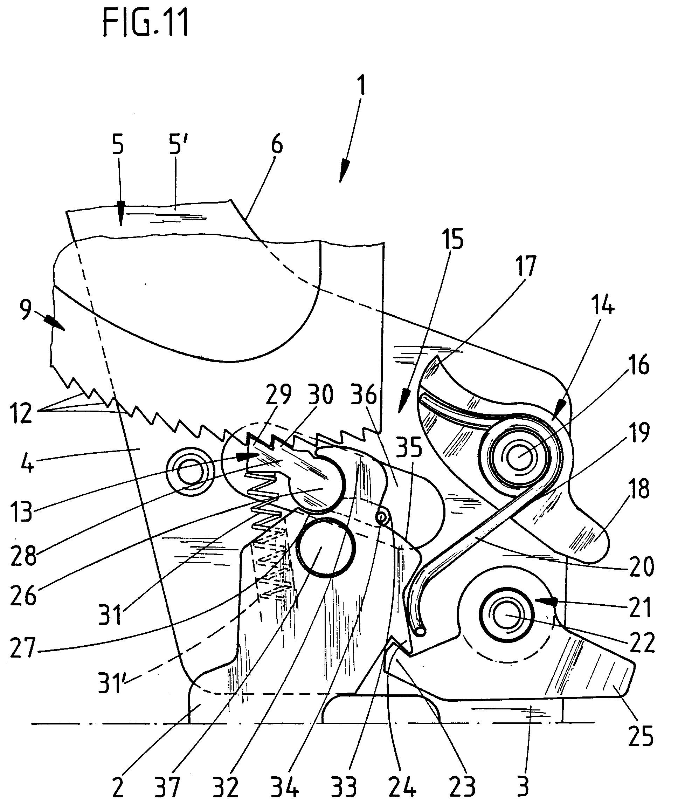

Der in den Figuren 1-11 dargestellte Ratschenschneider 1 der ersten Ausführungsform besitzt einen Schwenkgriff 2 und einen Festgriff 3, der materialeinheitlich in eine im wesentlichen rechteckige Lagerplatte 4 übergeht. Von dieser Lagerplatte 4 ausgehend ist eine feststehende Schneidbacke 5 mit einer bogenförmig, zügig konkav verlaufenden Schneidkante 6 ausgeformt. Die Schneidbacke 5 bildet an ihrem oberen Endbereich 7 ein Schwenklager 8 zur Lagerung der beweglichen Schneidbacke 9, die die Form eines Kreisabschnittes aufweist, mit der Schneidkante 10. Die bewegliche Schneidbacke 9 bewegt sich in einer parallelen Ebene zur festen Schneidbacke 5, wobei die planen Flächen 9' und 5' beim Schneidvorgang aneinandergleiten. Auf den von den planen Flächen 9' und 5' abgewandten Seiten der Schneidbacken 9 und 5 weisen die Schneidkanten 10 und 6 Schneidfasen 10' und 6' auf. Die Schneidkante 10 der beweglichen Schneidbacke 9 verläuft vom Schwenklager 8 ausgehend bogenförmig, stark konkav, übergehend in einen leicht konvexen Bereich und schließlich in einen weiteren, minder starken konkaven Bereich bis in den Endbereich 11. Auf dem äußeren Umfang der beweglichen Schneidbacke 9 ist diese mit einer Verzahnung 12 ausgestattet bzw. als Zahnsegment ausgebildet.

In die Verzahnung 12 greift ein einen Vorschubhebel 13 und einen Sperrhebel 14 aufweisender Ratschenmechanismus 15 ein. Der Sperrhebel 14 sitzt frei schwenkbar auf einem auf der Lagerplatte 4 angeordnetem Lagerzapfen 16 und bildet an seinem einen Ende eine Rastnase 17 und an dem dieser gegenüberliegendem Ende eine, seitlich die Lagerplatte 4 überragende, Handhabe 18 aus. In einer den Bereich des Lagerzapfens 16 einbeziehenden Ausnehmung 19 ist dem Sperrhebel 14 eine Spiralfeder 20 zugeordnet, die sich mit ihrem einen Ende im Bereich der Rastnase 17 an der Wandung der Ausnehmung 19 abstützt. Mit dem anderen Ende beaufschlagt die Spiralfeder 20 einen Verriegelungshebel 21, der, gelagert auf dem der Lagerplatte 4 zugeordneten Zapfen 22, entgegen dem Uhrzeigersinn in einer Offenstellung gehalten wird. Der Verriegelungshebel 21 bildet an seinem dem Schwenkgriff 2 zugekehrten Ende eine Verriegelungsnase 23 aus, die in Verriegelungsstellung einen Fortsatz 24 des Schwenkgriffes 2 hintergreift und somit den Schwenkgriff 2 fängt. An dem der Verriegelungsnase 23 entgegengesetzten Ende besitzt der Verriegelungshebel 21 eine Verriegelungshandhabe 25, die seitlich die Lagerplatte 4 überragt.

Der Vorschubhebel 13 ist mit einem Gelenkzapfen 26 in einer kreisabschnittsförmigen Gelenkausformung 27 des Schwenkgriffes 2 gelagert, wobei die Gelenkausformung 27 größer als 180° ist. An dem Gelenkzapfen 26 ist ein Hebel 28 mit zwei ausgeformten Rastzähnen 29 und 30 ausgebildet, welche Rastzähne unter Einwirkung einer Feder 31, die ihr Gegenlager in einer Bohrung 31' in einer Schwenkgriffstirnseite findet, in die Verzahnung 12 der Schneidbacke 9 einrasten. An der dem Hebel 28 entgegengesetzten Seite des Gelenkzapfen 26 ist diesem ein guerschnittskleinerer, die Gelenkausformung 27 ausbildende Nase 32 untergreifender Blockierungsfortsatz 33 angeformt. Der Blockierungsfortsatz 33 stützt sich bei Formschluß der Rastzähne 29 und 30 mit der Verzahnung 12 mit einem Anschlagstift 34 an einer Seitenfläche 35 des Schwenkgriffes 2 ab. Der Vorschubhebel 13 erstreckt sich von der Oberseite des Schwenkgriffes 2 bis in eine Ausnehmung 36 der Lagerplatte 4. Der Abstand zwischen der Unterseite des Schwenkgriffes 2 und dem Grund der Ausnehmung 36 entspricht hierbei der Dicke des die Nase 32 untergreifenden Blockierungsfortsatzes 33.

Der Schwenkgriff 2 ist auf einem Schwenkzapfen 37 gelagert. Eine zwischen dem Schwenkgriff 2 und dem Festgriff 3 angeordnete Spiralfeder 38 ist bestrebt, die Griffe immer in Offenstellung zu drücken, in der beide Griffe auseinandergespreizt sind.

Der Vorschubhebel 13, der Sperrhebel 14, der Verriegelungshebel 21, die Schneidbacke 9 und der Kopfbereich des Schwenkgriffes 2 befinden sich alle in derselben Ebene, besitzen alle eine gleiche Dicke und werden von einer angeschraubten Abdeckplatte 39 überdeckt. Hieraus ergibt sich eine sehr flache Sandwich-Bauweise, die sich aus drei Ebenen zusammensetzt. Die erste Ebene bildet die Lagerplatte 4 mit der sich daraus erstreckenden Schneidbacke 5. Die zweite Ebene setzt sich aus den oben genannten gleich dicken Einzelteilen, die auf die erste Ebene aufgesetzt werden, zusammen. Die dritte Ebene schließlich bildet die Abdeckplatte 39.

Ausgehend von der in Fig. 1 dargestellten Betriebsstellung ist die Funktion wie folgt:
Die bewegliche Schneidbacke 9 umschließt zum Teil ein sich zwischen der Schneidkante 10 der Schneidbacke 9 und der Schneidkante 6 der Schneidbacke 5 befindliches Werkstück W, wobei sich die Schneidbacke 9 über ihre Verzahnung 12 mit dem Ratschenmechanismus 15 in Eingriff steht. Die Schneidbacke 9 ist hierbei in einem zwischen der Lagerplatte 4 und der Abdeckplatte 39 vorgesehenen Schlitz 40 geführt. Nunmehr wird durch fortgesetztes, abwechselndes Freigeben und Zusammendrücken der Griffe 2 und 3 die bewegliche Schneidbacke 9 mittels des aus ihrer Verzahnung 12 und des Ratschenmechanismus' 15 gebildeten Schubtriebes absatzweise weiterbewegt. Bei Freigabe des Schwenkgriffes 2 verschwenkt dieser unter Federbelastung der Spiralfeder 38 und bewegt bei dieser Verlagerung über die Gelenkausformung 27 den Vorschubhebel 13 entgegen der Vorschubrichtung der Schneidbacke 9, wobei die Rastzähne 29 und 30 unter Belastung der Feder 31 über die Verzahnung 12 ratschenartig ausweichen. Hierbei verläßt der Blockierungsfortsatz 33 seine Anschlagposition an der Seitenfläche 35 des Schwenkgriffes 2 und stützt sich nunmehr an der Wandung der Ausnehmung 36 in der Lagerplatte 4 ab. Bei Zusammendrücken der Griffe 2 und 3 bewegt der Vorschubhebel 13 die Schneidbacke 9 in Schließrichtung, wobei sich die lichte Weite L zwischen den beiden Schneidkanten 6 und 10 verringert. Während dieses Vorganges ratscht der Sperrhebel 14 über die Verzahnung 12 und sperrt die Schneidbacke 9 gegen ein Zurückschwenken, was z. B. bei einem elastischen Werkstück W oder auch bei der Freigabe des Schwenkgriffes 2 geschehen kann. Durch ein mehr oder weniger weites Freigeben des Schwenkgriffes 2 läßt sich hierbei ein unterschiedlicher Vorschub erzielen, der entweder einem oder zwei Zähnen entspricht. Das Werkstück W wird von den Schneidkanten 6 und 10 zerteilt, sobald die lichte Weite L Null oder kleiner geworden ist. Sobald die bewegliche Schneidbacke 9 aus dem Eingriff mit dem Sperrhebel 14 herauswandert, verlagert sich dieser unter Einwirkung der Federvorspannung in den Schwenkbereich der Schneidbacke 9, nimmt bei dieser Verlagerung die Spiralfeder 20 mit und gibt somit den Verriegelungshebel 21 frei. Dieser verschwenkt nunmehr aufgrund seiner Gewichtsverteilung selbsttätig in die Verriegelungsstellung, in der die Verriegelungsnase 23 den Fortsatz 24 des Schwenkgriffes 2 fängt und diesen blockiert. Ein Auslösen der Verriegelung ist nur willensbetont möglich, in dem mittels Verriegelungshandhabe 25 der Verriegelungshebel 21 zurückgeschwenkt wird. Ein Verriegeln des Ratschenschneiders 1 ist jedoch auch dann möglich, wenn die bewegliche Schneidbacke 9 noch in Eingriff mit dem Sperrhebel 14 steht. Hierbei muß lediglich der Verriegelungshebel 21 entgegen der Federkraft der Spiralfeder 20 manuell verschwenkt werden.

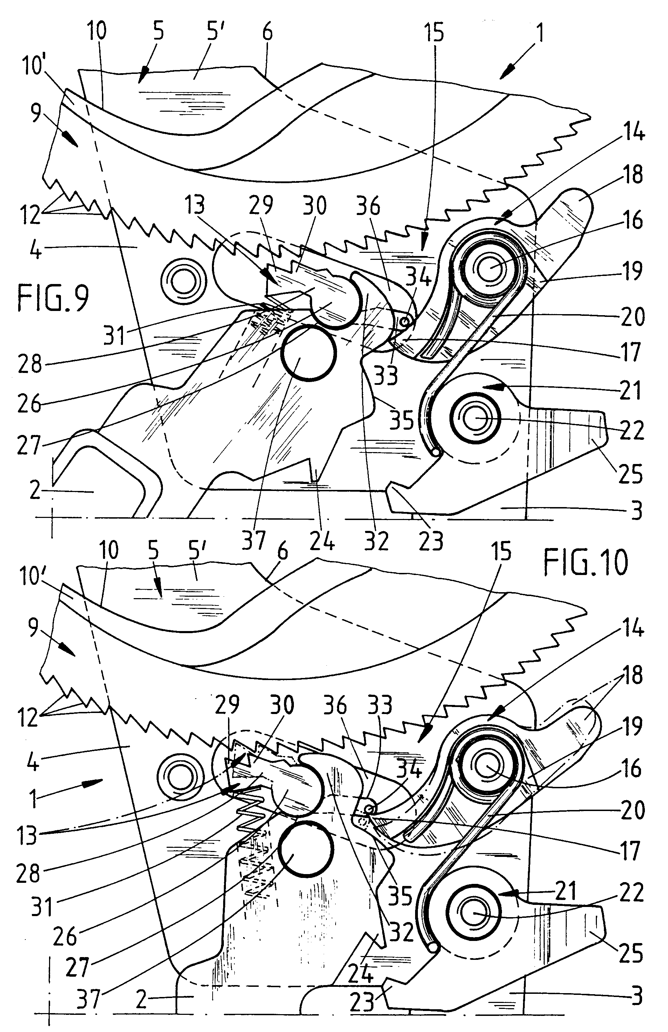

Eine Freigabe des Eingriffes zwischen der Verzahnung 12 und dem Ratschenmechanismus 15 kann im zusammengedrückten Zustand der Griffe 2 und 3 erfolgen. Hierbei wird der Sperrhebel 14 mittels einer Handhabe 18 entgegen der Federkraft der Spiralfeder 20 aus dem Eingriff zur Verzahnung 12 verschwenkt. Sodann wird der Schwenkgriff 2 freigegeben, wobei sich der Anschlagstift 34 des Blockierungsfortsatzes 33 an der im Bereich der Rastnase 17 befindlichen Seitenwandung des Sperrhebels 14 abstützt. Diese Abstützung hat zur Folge, daß sich der Vorschubhebel 13 um den Achsmittelpunkt des Gelenkzapfens 26 verschwenkt und somit ebenfalls außer Eingriff zur Verzahnung 12 gerät. Die Schneidbacke 9 ist nunmehr in beide Richtungen frei drehbar. Wie die in Fig. 9 dargestellte Situation verdeutlicht, erfolgt durch die gegenseitige Blockierung des Vorschubhebels 13 und des Sperrhebels 14 eine Arretierung der Freigabestellung. Diese erklärt sich dadurch, daß der Sperrhebel 14 danach strebt sich unter Federkraft in Uhrzeigerrichtung zurückzuverlagern. Diesem Drehmoment steht jedoch das Bestreben des Vorschubhebels 13 entgegen ebenfalls unter Federkraft in die Eingriffsstellung zu verschwenken. Diese beiden gegensinnigen Drehmomente heben sich an dem Kontaktpunkt zwischen Anschlagstift 34 und der Seitenwandung des Sperrhebels 14 auf. Ein gegenseitiges Blockieren der beiden Hebel 13 und 14 ist somit die Folge. Wie aus Fig. 10 zu erkennen ist, bleibt diese Arretierung auch beim Zusammendrücken der Griffe 2 und 3 erhalten. Ein Lösen der Freigabestellung erfolgt in einfachster Weise. Der Sperrhebel 14 wird mittels Handhabe 18 soweit gegen die Federkraft der Spiralfeder 20 verschwenkt, bis der Sperrhebel 14 den Anschlagstift 34 freigibt und dadurch es dem Vorschubhebel 13 ermöglicht, wieder in die Eingriffsstellung zur Verzahnung 12 zurückzuschwenken. Hiernach kann sich auch der Sperrhebel 14 wieder in die Eingriffsstellung zurückverlagern.

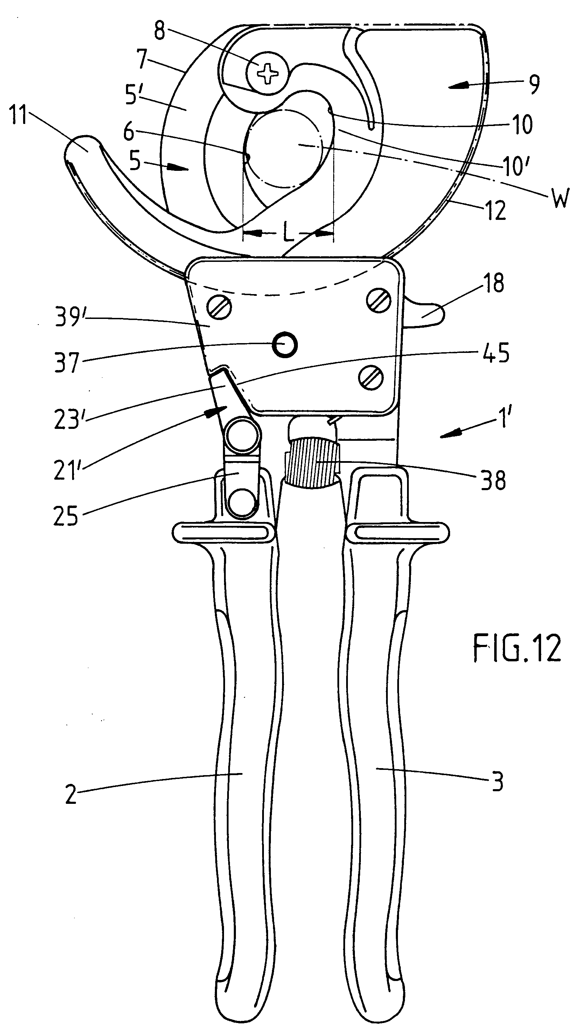

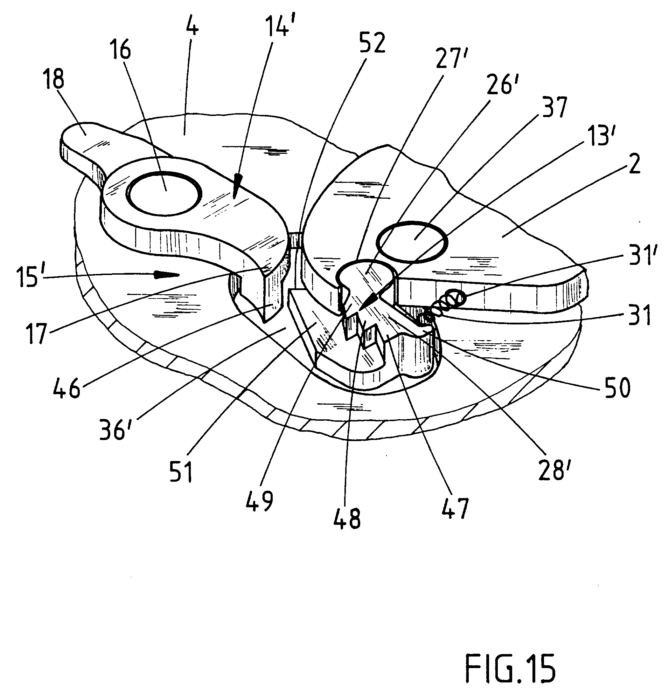

Der Aufbau des Ratschenschneiders 1' der zweiten Ausführungsform gemäß der Figuren 12 bis 15 entspricht im wesentlichen dem des Ratschenschneiders 1 der ersten Ausführungsform, wobei die Bezugsziffern für gleiche Bauteile auch in dieser Ausführungsform zutreffen.

Die Verriegelung des Ratschenschneiders 1' erfolgt hierbei mittels eines als Wippe ausgebildeten Verriegelungshebels 21', welcher vermittels eines Niets oder dergleichen an dem Schwenkgriff 2 schwenkbeweglich gelagert ist. Der Verriegelungshebel 21' weist einerseits eine in den Griffbereich des Schwenkgriffes 2 hineinragende Verriegelungshandhabe 25 und andererseits einen Verriegelungsfortsatz 23' auf. Dieser schwenkt in Verriegelungsstellung in eine randseitig angeordnete Ausnehmung 45 der Abdeckplatte 39' ein. Der durch die Spiralfeder 38 zum Ausschwenken bestrebende Griff 2 stützt sich in Verriegelungsstellung über die Stirnfläche des Verrieglungsfortsatzes 23' an einer entsprechend ausgeformten Anschlagschulter der Ausnehmung 45 ab. Zum Entriegeln des Ratschenschneiders 1' wird der Verriegelungshebel 21' mittels Daumenbetätigung in Offenstellung gebracht, wobei der Verriegelungsfortsatz 23' aus der Ausnehmung 45 der Abdeckplatte 39' heraustritt und somit den Schwenkgriff 2 freigibt.

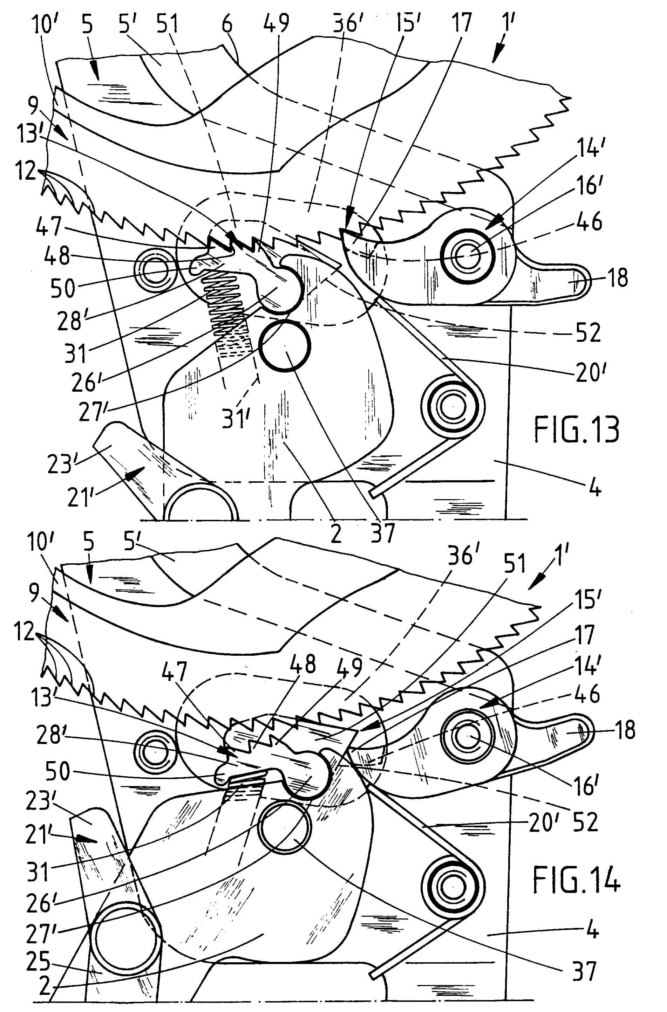

Wie in Figur 13 zu ersehen setzt sich der Ratschenmechanismus 15' ebenfalls aus einem Vorschubhebel 13' und einem Sperrhebel 14' zusammen. Die Ausnehmung 36' der Lagerplatte 4 ist hierbei größer als in der ersten Ausführungsform ausgebildet. In dem Bereich der Rastnase 17 ist dem Sperrhebel 14' eine in die Ausnehmung 36' hineinragende Nase 46 angeformt.

Der Vorschubhebel 13' ist gemäß Figur 13 mit einem Gelenkzapfen 26' in einer kreisabschnittsförmigen Gelenkausformung 27' des Schwenkgriffes 2 gelagert, wobei an dem Gelenkzapfen 26' ein Hebel 28' mit drei ausgeformten Rastzähnen 47 bis 49 ausgebildet ist, welche Rastzähne unter Einwirkung einer Feder 31, die ihr Gegenlager in einer Bohrung 31' in einer Schwenkgriffstirnseite findet, in die Verzahnung 12 der Schneidbacke 9 einrasten. Endseitig besitzt der Hebel 28' eine Wulst 50. Diese Wulst 50 verhindert, daß bei Schwenkbewegungen des Vorschubhebels 13' die Feder 31 ihre Abstützung an dem Hebel 28' verliert. Unterseitig des Vorschubhebels 13' ist diesem eine Platte 51 angeformt, die die Kontur des Vorschubhebels 13' überragt. Ihre Dicke entspricht im wesentlichen der Tiefe der Ausnehmung 36'.

Die Arbeitsweise des Ratschenschneiders 1' entspricht der der ersten Ausführungsform.

Die Freigabe des Eingriffes zwischen der Verzahnung 12 und dem Ratschenmechanismus 15' erfolgt in dieser Ausführungsform wie folgt:
Im zusammengedrückten Zustand der Griffe 2 und 3 wird der Sperrhebel 14' mittels seiner Handhabe 18 entgegen der Federkraft einer Spiralfeder 20', die sich einerseits am Sperrhebel 14' und andererseits an der Lagerplatte 4 abstützt, aus dem Eingriff zur Verzahnung 12 verschwenkt. Nunmehr wird der Schwenkgriff 2 freigegeben, wobei sich die Platte 51 des Vorschubhebels 13' mit seiner Anschlagkante 52 an der im Bereich der Rastnase 17 des Sperrhebels 14' angeordneten Nase 46 abstützt.

Diese Abstützung hat zur Folge, daß sich der Vorschubhebel 13' um den Achsmittelpunkt des Gelenkzapfens 26' verschwenkt und somit ebenfalls außer Eingriff zur Verzahnung gerät. Die Schneidbacke 9 ist nunmehr in beide Richtungen frei drehbar. Aus Figur 14 ist zu ersehen, daß die gegenseitige Blockierung des Vorschubhebels 13' und des Sperrhebels 14' eine Arretierung der Freigabestellung zur Folge hat, die im Bereich der Ausnehmung 36' erfolgt. Ein Lösen der Freigabestellung erfolgt durch einfaches Zusammendrücken der beiden Griffe 2 und 3. Der unter Federdruck nach oben (in der Zeichnung) vorgespannte Sperrhebel 14' wandert bei zusammengedrückten Griffen 2, 3 aus dem Rasthintergriff an der Platte 51 selbsttätig heraus.

Wie aus den Figuren 13 und 14 zu ersehen ist, wird die Platte 51 ständig bei allen Bewegungen des Ratschenmechanimus' 15' von der Schneidbacke 9 zumindest teilweise überdeckt. Durch diese Maßnahme ist im Bereich des Vorschubhebels 13' ein hohes Maß an Stabilität erzielt.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich.

## Patentansprüche

1. Handbetätigter Ratschenschneider (1, 1'), insbesondere Kabelschneider, mit einem beweglichen (2) und einem feststehenden Griffteil (3), wobei das feststehende Griffteil (3) eine erste feststehende Schneide (5) ausformt, die im wesentlichen kreisabschnittsförmig ausgebildet ist, wobei weiter an der feststehenden Schneide (5) eine bewegliche Schneide (9) angelenkt ist zur scherenartigen Zusammenwirkung mit der feststehenden Schneide (5), welche bewegliche Schneide (9) sich in einer Ebene parallel zu der ersten Schneide (5) bewegt und mit dieser zusammenwirkt und mit einem einen Sperrhebel (14, 14') und einen Vorschubhebel (13, 13') aufweisenden Ratschenmechanismus (15, 15' ), der in eine am äußeren Umfang der beweglichen Schneide (9) ausgebildete Verzahnung (12) eingreift, wobei weiter der Vorschubhebel (13, 13') mittels eines Gelenkzapfens (26, 26') gelagert ist und der Sperrhebel (14, 14') in eine Freigabestellung bewegbar ist, dadurch gekennzeichnet, daß der Vorschubhebel an einer Seite einen Blockierungsfortsatz (33, 51) aufweist und der Sperrhebel (14, 14') den Blockierungsfortsatz (33, 51) des Vorschubhebels (13, 13') in seiner Freigabestellung hintergreift, derart, daß der Vorschubhebel (13, 13') außer Eingriff bewegt wird und zugleich den Sperrhebel (14, 14') in seiner Freigabestellung blockiert.

2. Ratschenschneider nach Anspruch 1, dadurch gekennzeichnet, daß der Sperrhebel (14, 14') einen Handhabungsfortsatz (18) aufweist.

3. Ratschenschneider nach einem oder mehreren der vorhergehenden Ansprüche, dadurch gekennzeichnet, daß der Handhabungsfortsatz (18) sich in der Ebene des Sperrhebels (14, 14') erstreckt und seitlich eine Abdeckplatte (39, 39') überragt.

4. Ratschenschneider nach einem oder mehreren der vorhergehenden Ansprüche, wobei der Lagerungsbereich des Schwenkgriffes (2) zwischen einer Lagerplatte (4) des Festgriffes (3) und einer Abdeckplatte (39, 39') aufgenommen ist, dadurch gekennzeichnet, daß ein Gelenkzapfen (26, 26') des Vorschubhebels (13, 13') lose in einer Gelenkausformung (27, 27') des Schwenkgriffes (2) sowie zwischen der Lagerplatte (4) und der Abdeckplatte (39, 39') aufgenommen ist.

5. Ratschenschneider nach Anspruch 4, dadurch gekennzeichnet, daß die Gelenkausformung (27, 27') im wesentlichen halbkreisförmig ist.

6. Ratschenschneider nach Anspruch 4, dadurch gekennzeichnet, daß die Gelenkausformung (27, 27') größer als 180° ist.

7. Ratschenschneider nach einem oder mehreren der vorhergehenden Ansprüche, dadurch gekennzeichnet, daß der Vorschubhebel (13, 13') sich in eine in der Lagerplatte (4) ausgebildete Aufnahmetasche (36, 36') erstreckt.

8. Ratschenschneider nach einem oder mehreren der vorhergehenden Ansprüche, dadurch gekennzeichnet, daß der Blockierungsfortsatz (33, 51) den Schwenkhebel (2) untergreift und durch den Sperrhebel (14) fangbar ist.

9. Ratschenschneider nach einem oder mehreren der vorhergehenden Ansprüche, dadurch gekennzeichnet, daß der Sperrhebel (14) und ein Verriegelungshebel (21) von einer gemeinsamen Feder (20) beaufschlagt sind.

10. Ratschenschneider nach Anspruch 9, dadurch gekennzeichnet, daß die Feder (20) in der Freigabestellung und der Eingriffsstellung des Sperrhebels (14) den Verriegelungshebel (2) in eine Offenstellung vorspannt.

11. Ratschenschneider nach einem oder mehreren der vorhergehenden Ansprüche, dadurch gekennzeichnet, daß die Feder (20) den Verriegelungshebel (21) freigibt bei einem Herauswandern der beweglichen Schneide (9) aus dem Eingriff mit dem Sperrhebel (14).

12. Ratschenschneider nach einem der Ansprüche 9 oder 10, dadurch gekennzeichnet, daß der Ratschenmechanismus (15, 15') im wesentlichen in einer (ebenen) Lage zwischen einer oberen Abdeckplatte (39, 39') und einer unteren Lagerplatte (4) gebildet ist, wobei notwendige Unter- bzw. Übergreifungen mittels einer Taschenausbildung (36, 36') in der oberen Abdeckplatte (39, 39') und/oder unteren Lagerplatte (4) realisiert sind.

13. Ratschenschneider nach einem oder mehreren der vorhergehenden Ansprüche, dadurch gekennzeichnet, daß der Schwenkgriff (2) wahlweise über einen Winkel verschwenkbar ist, der einen Vorschub um einen oder zwei Zähne der Verzahnung (12) der beweglichen Schneide (Schneidbacke 9) entspricht.

14. Ratschenschneider nach Anspruch 12, dadurch gekennzeichnet, daß der Sperrhebel (14') eine in die Ausnehmung (36') eintauchende Nase (46) ausbildet, zur Erfassung des Vorschubhebels (13').

15. Ratschenschneider nach Anspruch 12, dadurch gekennzeichnet, daß der Blockierungsfortsatz als eine unterseitig des Vorschubhebels (13') die Kontur des Vorschubhebels (13') überragende Platte (51) ausgebildet ist, die in ihrer Dicke im wesentlichen der Tiefe der Ausnehmung (36') entspricht.

16. Ratschenschneider nach Anspruch 15, dadurch gekennzeichnet, daß die Platte (51) und entsprechend die Ausnehmung (36') mit einer solchen Größe ausgebildet sind, daß sie ständig bei allen Bewegungen in Überdeckung mit der Schneidbacke (9) sind.

17. Ratschenschneider nach einem oder mehreren der vorhergehenden Ansprüche, dadurch gekennzeichnet, daß ein Rasthintergriff des Sperrhebels (14, 14') bei einem Zusammendrücken der Griffe (2, 3) freigebbar ist.

## Claims

1. Hand-operated ratchet cutter (1, 1'), especially cable cutter, with a movable (2) and a fixed grip part (3) with which the fixed grip part (3) forms a first fixed knife edge (5), which is constructed essentially in the form of a segment of a circle, with which further a movable knife edge (9) is pivoted on the fixed knife edge (5) to work together with the first knife edge (5) like scissors, which movable knife edge (9) moves in a plane parallel to the first knife edge (5) and works together with the latter and with a ratchet mechanism (15, 15'), comprising a locking lever (14, 14') and an advancing lever (13, 13'), which engages in a gear-tooth construction (12) constructed on the outer periphery of the movable knife edge (9), with which further the advancing lever (13, 13') is mounted by means of a hinge pin (26, 26') and the locking lever (14, 14') can be moved into a release position, characterised in that the advancing lever comprises a blocking extension (33, 51) on one side and the locking lever (14, 14') engages behind the blocking extension (33, 51) of the advancing lever (13, 13') in its release position in such a way that the advancing lever (13, 13') is moved out of engagement and at the same time blocks the locking lever (14, 14') in its release position.

2. Ratchet cutter according to claim 1, characterised in that the locking lever (14, 14') comprises a handling extension (18).

3. Ratchet cutter according to one or several of the preceding claims, characterised in that the handling extension (18) extends in the plane of the locking lever (14, 14') and projects laterally over a cover plate (39, 39').

4. Ratchet cutter according to one or several of the preceding claims with which the mounting region of the pivot grip (2) is accommodated between a base plate (4) of the fixed grip (3) and a cover plate (39, 39'), characterised in that a hinge pin (26, 26') of the advancing lever (13, 13') is accommodated loosely in a hinge recess (27, 27') of the pivot grip (2) as well as between the base plate (4) and the cover plate (39, 39').

5. Ratchet cutter according to claim 4, characterised in that the hinge recess (27, 27') is essentially semicircular in shape.

6. Ratchet cutter according to claim 4, characterised in that the hinge recess (27, 27') is greater than 180°.

7. Ratchet cutter according to one or several of the preceding claims, characterised in that the advancing lever (13, 13') extends into a receiving pocket (36, 36') constructed in the base plate (4).

8. Ratchet cutter according to one or several of the preceding claims, characterised in that the blocking extension (33, 51) engages under the pivot lever (2) and can be caught by the locking lever (14).

9. Ratchet cutter according to one or several of the preceding claims, characterised in that the locking lever (14) and a latching lever (21) are acted on by a common spring (20).

10. Ratchet cutter according to claim 9, characterised in that the spring (20) in the release position and the engagement position of the locking lever (14) biases the latching lever (21) in an open position.

11. Ratchet cutter according to one or several of the preceding claims, characterised in that the spring (20) releases the latching lever (21) when the movable knife edge (9) migrates out of engagement with the locking lever (14).

12. Ratchet cutter according to one of the claims 9 or 10, characterised in that the ratchet mechanism (15, 15') is formed essentially in a (planar) position between an upper cover plate (39, 39') and a lower base plate (4) with which necessary underlappings or overlappings are realised by means of a pocket construction (36, 36') in the upper cover plate (39, 39') and/or lower base plate (4).

13. Ratchet cutter according to one or several of the preceding claims, characterised in that the pivot grip (2) is optionally pivotable through an angle which corresponds to an advancement by one or two teeth of the gear-tooth construction (12) of the movable knife edge (cutting jaw 9).

14. Ratchet cutter according to claim 12, characterised in that the locking lever (14') forms a lip (46) dipping into the recess (36') for catching the advancing lever (13').

15. Ratchet cutter according to claim 12, characterised in that the blocking extension is constructed as a plate (51) on the underside of the advancing lever (13') projecting beyond the contour of the advancing lever (13') whose thickness corresponds essentially to the depth of the recess (36').

16. Ratchet cutter according to claim 15, characterised in that the plate (51) and correspondingly the recess (36') are constructed in such a size that they constantly overlap with the cutting jaw (9) during all movements.

17. Ratchet cutter according to one or several of the preceding claims, characterised in that a locking rear engagement of the locking lever (14, 14') can be released when the grips (2, 3) are pressed together.

## Revendications

1. Organe de coupe à cliquet (1, 1') à actionnement manuel, en particulier pince coupante pour câble, avec une partie de poignée mobile (2) et une partie de poignée fixe (3), la partie poignée fixe (3) constituant un premier tranchant fixe (5) réalisé sensiblement en forme de section de cercle, en outre sur le tranchant fixe (5) un tranchant mobile (9) étant articulé, pour coopérer à la façon de ciseaux avec le tranchant fixe (5), le tranchant mobile (9) se déplaçant dans un plan parallèle au premier tranchant et coopérant avec celui-ci et avec un mécanisme à cliquet (15, 15') présentant un levier de blocage (14, 14') et un levier d'avancement (13, 13'), ce mécanisme à cliquet (15, 15') s'engageant dans une denture (12) réalisée sur la périphérie extérieure du tranchant mobile (9), en outre le levier d'avancement (13, 13') étant monté à rotation, au moyen d'un tourillon d'articulation (26, 26'), et le levier de blocage (14, 14') étant déplaçable dans une position de libération, caractérisé en ce que le levier d'avancement présente sur une face un prolongement de blocage (33, 51) et en ce que le levier de blocage (14, 14'), dans sa position de libération, agit par l'arrière sur le prolongement de blocage (33, 51) du levier d'avancement (13, 13'), de manière que le levier d'avancement (13, 13') soit déplacé hors de prise et bloque en même temps le levier de blocage (14, 14') dans sa position de libération.

2. Organe de coupe à cliquet selon la revendication 1, caractérisé en ce que le levier de blocage (14, 14') présente un prolongement de manipulation (18).

3. Organe de coupe à cliquet selon l'une ou plusieurs des revendications précédentes, caractérisé en ce que le prolongement de manipulation (18) s'étend dans le plan du levier de blocage (14, 14') et dépasse latéralement d'une plaque de recouvrement (39, 39').

4. Organe de coupe à cliquet selon l'une ou plusieurs des revendications précédentes, dans lequel la zone de tourillonnement de la poignée de pivotement (2) est étant logée entre une plaque de tourillonnement (4) de la poignée fixe (3) et une plaque de recouvrement (39, 39'), caractérisé en ce qu'un tourillon d'articulation (26, 26') du levier d'avancement (13, 13') est logé, de façon lâche, dans une cavité d'articulation (27, 27') de la poignée de pivotement (2) ainsi qu'entre la plaque de tourillonnement (4) et la plaque de recouvrement (39, 39').

5. Organe de coupe à cliquet selon la revendication 4, caractérisé en ce que la cavité d'articulation (27, 27') est sensiblement en forme de demi-cercle.

6. Organe de coupe à cliquet selon la revendication 4, caractérisé en ce que la cavité d'articulation (27, 27') s'étend sur plus de 180°.

7. Organe de coupe à cliquet selon l'une ou plusieurs des revendications précédentes, caractérisé en ce que le levier d'avancement (13, 13') s'étend dans une poche de réception (36, 36') réalisée dans la plaque de tourillonnement (4).

8. Organe de coupe à cliquet selon l'une ou plusieurs des revendications précédentes, caractérisé en ce que le prolongement de blocage (33, 51) saisit par le dessous le levier de pivotement (2) et peut être capté au moyen du levier de blocage (14).

9. Organe de coupe à cliquet selon l'une ou plusieurs des revendications précédentes, caractérisé en ce que le levier de blocage (14) et un levier de verrouillage (21) sont sollicités par un ressort (20) commun.

10. Organe de coupe à cliquet selon la revendication 9, caractérisé en ce que le ressort (20), dans la position de libération et la position d'engagement du levier de blocage (14), sollicite le levier de verrouillage (2) vers une position d'ouverture.

11. Organe de coupe à cliquet selon l'une ou plusieurs des revendications précédentes, caractérisé en ce que le ressort (20) libère le levier de verrouillage (21) lorsque le tranchant mobile (9) cesse d'être en contact avec le levier de blocage (14).

12. Organe de coupe à cliquet selon la revendication 9 ou la revendication 10, caractérisé en ce que le mécanisme à cliquet (15, 15') est constitué essentiellement d'une plaque (plane) située entre une plaque de recouvrement supérieure (39, 39') et une plaque de tourillonnement inférieure (4), les prises de contact par le dessous, respectivement le dessus, nécessaires étant réalisées par formation de poches (36, 36') dans la plaque de recouvrement supérieure (39, 39') et/ou dans la plaque de tourillonnement inférieure (4).

13. Organe de coupe à cliquet selon l'une ou plusieurs des revendications précédentes, caractérisé en ce que la poignée de pivotement (2) peut pivoter au choix d'un angle qui correspond à une avance de la valeur d'une ou de deux dents de la denture (12) du tranchant mobile (mâchoire de coupe 9).

14. Organe de coupe à cliquet selon la revendication 12, caractérisé en ce que le levier de blocage (14') forme un bec (46) plongeant dans l'évidement (36'), pour saisir le levier d'avancement (13).

15. Organe de coupe à cliquet selon la revendication 12, caractérisé en ce que le prolongement de blocage est réalisé sous forme d'une plaque (51) dépassant, en face inférieure du levier d'avancement (13'), le contour du levier d'avancement (13') et dont l'épaisseur correspondant sensiblement à la profondeur de l'évidement (36').

16. Organe de coupe à cliquet selon la revendication 15, caractérisé en ce que la plaque (51) et, de manière correspondante, l'évidement (36'), sont réalisés d'une taille telle qu'ils soient constamment en recouvrement avec la mâchoire de coupe (9) pour tous les déplacements.

17. Organe de coupe à cliquet selon l'une ou plusieurs des revendications précédentes, caractérisé en ce que la saisie par l'arrière, à cliquet, du levier de blocage (14, 14') est susceptible d'être libérée lorsque les poignées (2, 3) sont comprimées.
